# EUROPÄISCHE PATENTSCHRIFT

(11) **EP 0 773 125 B1**
(45) Veröffentlichungstag und Bekanntmachung des Hinweises auf die Patenterteilung: **09.08.2000**
(21) Anmeldenummer: 96117309.3
(22) Anmeldetag: 29.10.1996
(51) Int. Cl.: B60J 3/02

(54) **Spiegelbaueinheit**
Mirror assembly
Ensemble de miroir

(30) Priorität: 07.11.1995 DE 19541391
(43) Veröffentlichungstag der Anmeldung: 14.05.1997
(73) Patentinhaber: Johnson Controls Interiors GmbH & Co. KG, 42285 Wuppertal (DE)
(72) Erfinder: Viertel, Lothar, 66802 Altforweiler (DE); Welter, Patrick, 57730 La Chambre (FR)

(56) Entgegenhaltungen:
- DE-A- 3 814 182
- DE-A- 4 302 607
- DE-C- 4 023 243
- DE-C- 4 102 517

## Beschreibung

Die Erfindung bezieht sich auf eine Spiegelbaueinheit für Fahrzeugsonnenblenden.

Zur Aufwertung und Erhöhung des Komforts werden Fahrzeugsonnenblenden in ständig zunehmendem Maße mit Spiegeln ausgerüstet. Um dabei einer Blendungsgefahr vorzubeugen sind auch Abdeckungen für die Spiegel in Form von Schiebern, Klappdeckeln, Rollos und dgl. gebräuchlich. Damit der Montageaufwand in Grenzen gehalten wird, sind Spiegel und Spiegelabdeckung in der Regel zu einer Spiegelbaueinheit zusammengefaßt. Die bisher im Einsatz befindlichen Spiegelbaueinheiten sind mit einem rechteckigen Spiegel ausgestattet, offenbar in Anpassung an die rechteckige Formgebung der Fahrzeugsonnenblenden, jedoch wohl nicht aus funktionalen Gründen.

Eine herkömmliche Spiegelbaueinheit ist z. B. in der DE 41 02 517 A1 gezeigt.

Der vorliegenden Erfindung liegt die Aufgabe zugrunde, eine Spiegelbaueinheit für Fahrzeugsonnenblenden zur Verfügung zu stellen, mit einem der menschlichen Kopfform angepaßten Spiegel und einer Spiegelabdeckung, die auf kleinstem Raum ihre Funktion zu erfüllen vermag. Insbesondere wird auch eine kostengünstige und den ästhetischen Ansprüchen vollauf gerecht werdende Gestaltungsform angestrebt.

Gegenstand der Erfindung ist daher eine Spiegelbaueinheit für Fahrzeugsonnenblenden mit einem flachen oval- oder ellipsenförmigen Gehäuse, einem Gehäuseboden, der umlaufend von einem zu diesem senkrecht ausgerichteten Kragen umgeben ist und eine kreisrunde Öffnung in einem Längsende aufweist, einem die Öffnung vom Gehäuseinnern her abdeckenden runden Spiegel, dessen Durchmesser größer als der der Öffnung ist und einem flachen Deckel, der birnen- bzw. tropfenförmig gestaltet und innerhalb des Gehäuses an einem Endbereich der kurzen Gehäuseachse derart schwenkbeweglich angelenkt ist, daß er in einer ersten Endstellung den Spiegel abzudecken und in einer zweiten Endstellung den Spiegel im wesentlichen freizulegen vermag.

Da die Kopfform der Menschen oval, also mehr zu rund, gegeben ist - und nicht rechteckig - wurde die Spiegelform angepaßt. Mehr zur Spiegelwiedergabe wird nicht benötigt; alles was darüber hinaus an Spiegelfläche angeboten wird, ist überflüssig. Die schwenkbar gelagerte Spiegelabdeckung ist u. a. auch aufgrund des Biodesigns abgeleitet und entstanden und hat den Vorteil, auf kleinstem Raum ihre Funktion zu erfüllen, bietet somit eine sinnvolle und gute Alternative zu den vorbekannten Systemen. Durch die Erfindung wird ein, dem heutigen Biodesign angepaßter Spiegel vorgefunden mit der Gestaltung eines kreisförmigen Spiegels und damit einer optimalen Flächennutzung sowie einer neuartig drehbar gelagerten Spiegelabdeckung. Diese Auslegung bzw. Konzeption der Abdeckungsart bietet gegenüber einer Schiebeabdeckung den Vorteil, platzsparend ausgelegt werden zu können, was z. B. bei kleineren Blenden durchaus vorteilhaft ist.

Zweckmäßige Ausgestaltungen und vorteilhafte Weiterbildungen der Erfindung sind in den Unteransprüchen angegeben.

Ein Ausführungsbeispiel der Erfindung wird im folgenden anhand der Zeichnungen näher erläutert, und es zeigen:

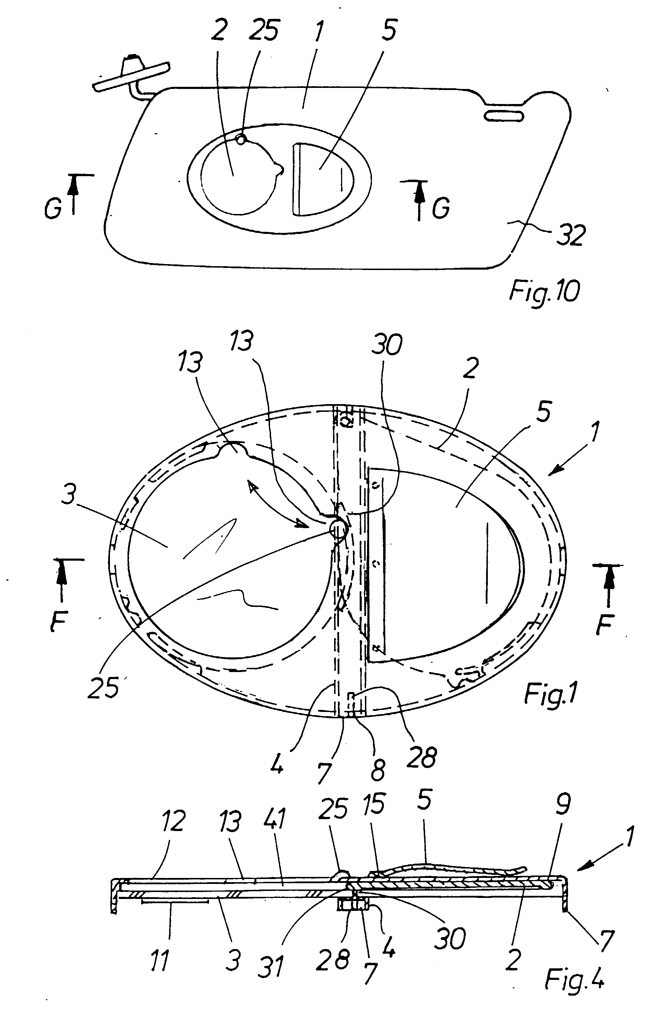

- Fig. 1: eine Draufsicht auf die Spiegelbaueinheit,
- Fig. 2: eine Rückansicht der Spiegelbaueinheit,
- Fig. 3: eine perspektivische Explosivdarstellung der Spiegelbaueinheit
- Fig. 4: einen Schnitt F - F nach Fig. 1,
- Fig. 5: einen Schnitt A - A nach Fig. 2,
- Fig. 6: einen Schnitt B - B nach Fig. 2,
- Fig. 7: einen Schnitt C - C nach Fig. 2,
- Fig. 8: einen Schnitt D - D nach Fig. 2,
- Fig. 9: einen Schnitt E - E nach Fig. 2,

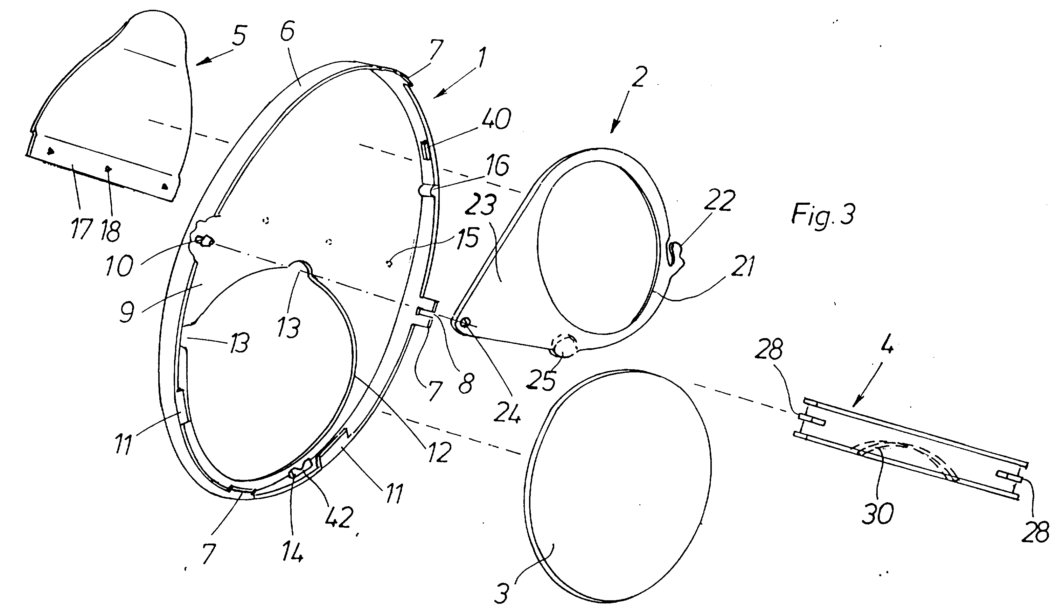

- Fig. 10: eine Fahrzeugsonnenblende mit Spiegelbaueinheit,
- Fig. 11: ein erstes und
- Fig. 12: ein zweites Einbaubeispiel der Spiegelbaueinheit etwa folgend G - G in Fig. 10.

Das Gehäuse 1 ist ein Kunststoffspritzling und aufgrund der Konstruktion und Konzeption von ovaler bzw. elliptischer Formgebung. Auch aus Stabilitätsgründen ist ein umlaufender Kragen 6 angebracht mit daran angeordneten, jeweils der Oval- bzw. Ellipsenmitte gegenüberliegenden erhabenen Stegen 7, die später zum Spiegelschweißen dienen können. Die auf der Gehäuseschmalseite angebrachten gegenüberliegenden Stege 7 sind mit einem Durchgangsschlitz 8 versehen, der zur Fixierung eines zum Schluß zu montierenden Stabilisierungselements 4 dient.

An der Innenwandung des Gehäusebodens 9 ist örtlich ein Lagerzapfen 10 mit entsprechendem Hinterschnitt angespritzt. Der Gehäuseboden 9 hat örtlich eine runde Öffnung 12 mit zwei halbkreisförmigen Ausbuchtungen 13. Für die Spiegelaufnahme und Distanzierung sind am Kragen 6 innen zwei Stege 14 angebracht, die den Spiegel 3 auf entsprechende Distanz positionieren, wobei die weiteren Stege 11 den Spiegel 3 gegen ein Herausfallen sichern. An der Außenseite des Gehäusebodens 9 sind örtlich Schweißzonen 5 angebracht, die für eine Ultraschallverschweißung einer Tiketklammer 5 dienen. An der Innenseite des umlaufenden Kragens 6 ist für eine leichte Verrastung des Deckels 2 in Offenstellung eine Erhöhung 16 vorgesehen. An der Innenseite des Kragens 6 ist ein zusätzlicher Steg 40 angebracht, der den Deckel 2 in der offenen Endstellung zusätzlich führen soll und auf Distanz hält, damit keine Verkantung oder ein Kippen hervorgerufen wird.

Die Tiketklammer 5 ist ein Kunststoffspritzling und der runden bzw. elliptischen Masken- bzw. Gehäusekontur angepaßt. Vorgesehen sind an dem Befestigungssteg 17 Schweißzonen 18, die konform und deckungsgleich abgestimmt sind mit den Schweißzonen 15 am Gehäuse 1.

Der als Spiegelabdeckung dienende Deckel 2 ist ein Kunststoffspritzling mit etwa birnenartiger bzw. tropfenförmiger Formgebung. Auf der Innenfläche des Deckels 2 ist eine kreisförmige Vertiefung 21 vorgesehen. Diese soll eine flächige Berührung mit dem Spiegel 3 vermeiden und ein besseres Gleiten bewirken. Örtlich ist eine federnde Rastzunge 22 vorgesehen, die den Deckel 2 in der Offen- und Zu-Stellung fixieren soll. In dem spitz zulaufenden Konturbereich 23 des Deckels 2 ist ein Aufnahmeloch 24 angebracht und dient als Lagerstelle (Drehpunkt) für den Deckel 2. Zur Bedienung des Deckels 2 ist an diesem eine Betätigungshandhabe 25 angebracht.

Der Spiegel 3 hat eine runde Formgebung und ist vorzugsweise aus Glas in handelsüblicher Qualität. Der Spiegel 3 kann aber auch aus z. B. Kunststoff oder Metall bestehen. Die Rückseite des Spiegels 3 ist für eine evtl. erforderliche Splitterbindung mit einer elastischen Schutzschicht versehen.

Das Stabilisierungselement 4 ist ein U-förmiges Kunststoff-Spritzgußteil. An den Enden des U-Profils sind im U-Kanal Stege 28 integriert, die für eine Steckmontage dienen. Auf der Unterseite des U-Profils ist ein zur Verschiebesicherung des Spiegels 3 dienendes Kreissegment 30 angespritzt.

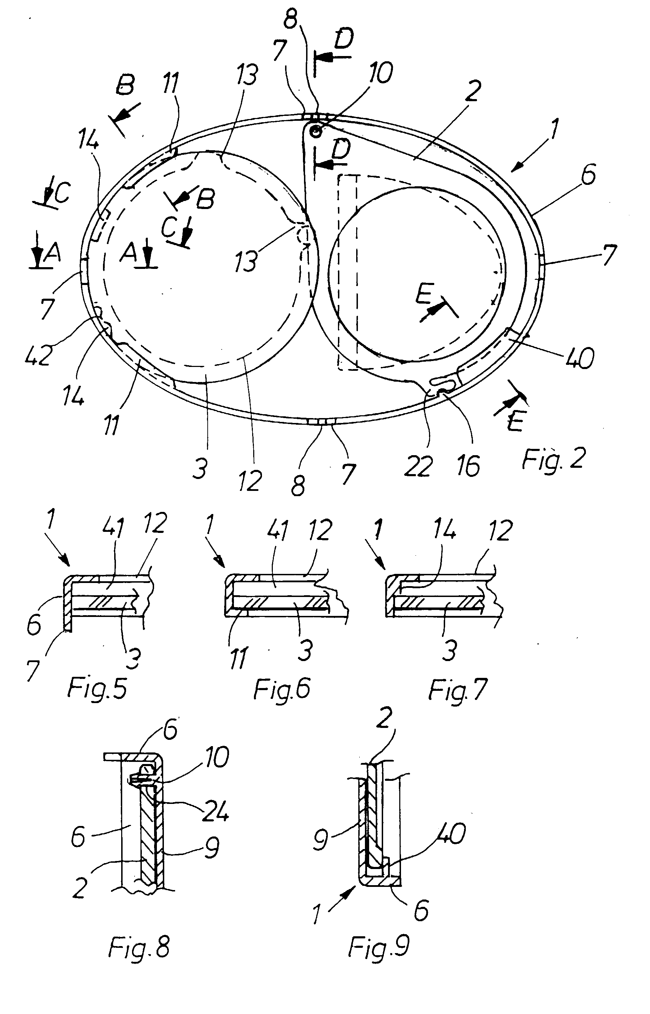

Bei der Montage wird zunächst die Tiketklammer 5 dem Gehäuseboden 9 zugeführt und mittels Ultraschallverschweißung an den vorgesehenen Schweißzonen 15 und 18 unlösbar verbunden. Danach erfolgt eine Montage des Deckels 2, in der Art, daß das Aufnahmeloch 24 dem Lagerzapfen 10 zugeführt und aufgeklipst wird. Der Hinterschnitt am Lagerzapfen 10 verhindert ein Lösen. Der Deckel 2 wird nun entsprechend Fig. 2 in der Aufstellung eingeschwenkt, wobei die federnde Rastzunge 22 an der Erhöhung 16 einschnappt. Die halbkreisförmige Erhöhung bzw. Betätigungshandhabe 25 befindet sich nun in einer der halbkreisförmigen Ausbuchtungen 13 und ragt zur Betätigungsmöglichkeit aus dem Gehäuseboden 9 hervor. Nun kann der Spiegel 3 als vorletztes Teil montiert werden. Hierzu wird der Spiegel 3 etwa gehäusemittig eingelegt, seitlich entsprechend Fig. 2 nach links geschoben, wobei der Spiegel 3 durch die Stege 14 auf Höhendistanz gebracht wird und durch die Stege 11 gegen ein Herausfallen gesichert wird.

Durch eine gewollte segmentartige Überlappung 31 zwischen Spiegel 3 und Deckel 2 ist der Deckel 2 von der Auf- bis zur Zu-Stellung immer ausreichend auf Distanz gehalten und hat immer eine Auflage.

Als letztes Teil wird das Stabilisierungselement 4 montiert. Hierzu wird das U-Profil mit den Stegen 28 nach außen entsprechend Fig. 2 dem Gehäuse 1 zugeführt. Die in dem U-Kanal angebrachten Stege 28 werden in den Durchgangsschlitz 8 der beiden Stege 7 in Selbsthemmung eingedrückt. Das auf der Unterseite des U-Profils angebrachte Kreissegment 30 bewirkt, daß dieses den Spiegel 3 gegen Verschieben sichert und die Unterseite des U-Profils 4 dient zur Spiegelauflage wie in Fig. 2 dargestellt.

Der Deckel 2 wird z. B. von der Position "Aufstellung" mittels der Betätigungshandhabe 25 über den Spiegel 3 entsprechend der dargestellten Pfeilrichtung geschwenkt, dabei wird der Deckel 2 in dem freien Kanal 41 geführt, soweit bis die Betätigungshandhabe 25 in die dafür vorgesehene halbkreisförmige Ausbuchtung 13 eingetaucht ist. Gleichzeitig wird eine leichte Verrastung des Deckels 2 bewirkt durch eine Vertiefung 42 mit der Rastzunge 22 an einer der Distanzstege 14. Der Spiegel 3 ist nun abgedeckt. Zum Öffnen ist der Bedienvorgang wie der des Schließens. In der Stellung "Auf" wird der Deckel 2 ebenso fixiert durch die Rastzunge 22 in Verbindung mit der Erhöhung 16.

Im Schnitt nach Fig. 11 ist dargestellt, daß die komplette Spiegelbaueinheit in die bereits umschweißte Sonnenblende 32 eingesetzt ist. Zur Befestigung der Spiegelbaueinheit am Sonnenblendenkörper ist vorgesehen, daß mittels des Verfahrens Spiegelschweißens (vgl. DE 43 02 607 A1) die Stege 7 dienen. Die komplette Spiegelbaueinheit wird so weit in die Vertiefung 33 des Sonnenblendenkörpers eingedrückt, bis der umlaufende Kragen 6 Berührung mit der Vertiefungsfläche 34 bekommt.

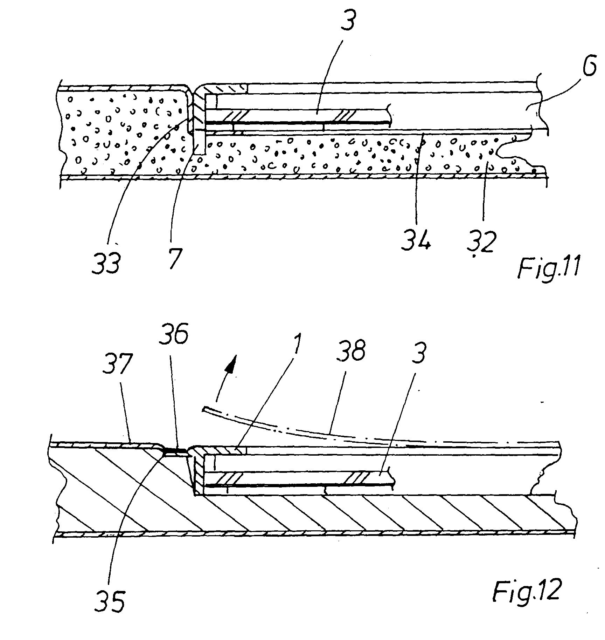

Bei Fahrzeugsonnenblenden, die ein Spiegelschweißen nicht erlauben, ist, wie in Fig. 12 gezeigt vorgesehen, daß das Gehäuse umlaufend einen ausgebildeten Flansch 35 aufweist. Dieser dient zur Rundum HF-Schweißung 36 mit der Folie 37, wobei in einem Arbeitsgang geschweißt und mittels einer in der Elektrode befindlichen Schneide die Folie 37 abgetrennt wird. Das Folieninnenfeld 38 wird danach herausgerissen, entsprechend der Darstellung in Fig. 12.

## Patentansprüche

1. Spiegelbaueinheit für Fahrzeugsonnenblenden mit
- einem flachen oval- oder ellipsenförmigen Gehäuse (1),
- einem Gehäuseboden (9), der umlaufend von einem zu diesem senkrecht ausgerichteten Kragen (6) umgeben ist und eine kreisrunde Öffnung (12) an einem Längsende aufweist,
- einem die Öffnung (12) vom Gehäuseinnern her abdeckenden runden Spiegel (3), dessen Durchmesser größer als der der Öffnung (12) ist und
- einem flachen Deckel (2), der birnen- bzw. tropfenförmig gestaltet und innerhalb des Gehäuses (1) an einem Endbereich der kurzen Gehäuseachse derart schwenkbeweglich angelenkt ist, daß er in einer ersten Endstellung den Spiegel (3) abzudecken und in einer zweiten Endstellung den Spiegel (3) im wesentlichen freizulegen vermag.

2. Spiegelbaueinheit nach Anspruch 1, dadurch gekennzeichnet, daß der Deckel (2) zwischen dem Gehäuseboden (9) und dem Spiegel (3) verschwenkbar gelagert ist und daß der Deckel (2) in seiner den Spiegel (3) freilegenden Position den Spiegel (3) noch geringfügig abdeckt.

3. Spiegelbaueinheit nach Anspruch 1 oder 2, dadurch gekennzeichnet, daß der Kragen (6) am der kreisrunden Öffnung (12) benachbarten Endbereich des Gehäuses (1) obere und untere Stegsegmente (11, 14) aufweist, zwischen denen der Spiegel 3 aufgenommen ist und daß das Gehäuse (1) ein sich längs der kurzen Gehäuseachse erstreckendes Stabilisierungselement (4) mit einem Verschiebesicherungs-Element (30) für den Spiegel (3) trägt.

4. Spiegelbaueinheit nach wenigstens einem der Ansprüche 1 - 3, dadurch gekennzeichnet, daß der Deckel (2) an einem Randbereich eine Federzunge (22) aufweist und daß am Kragen (6) des Gehäuses (1) Rastelemente (16, 42) zum Verrasten der Federzunge (22) angeordnet sind.

5. Spiegelbaueinheit nach wenigstens einem der Ansprüche 1 - 4, dadurch gekennzeichnet, daß der Deckel (2) mit einer Betätigungshandhabe (25) versehen ist.

6. Spiegelbaueinheit nach wenigstens einem der Ansprüche 1 - 5, dadurch gekennzeichnet, daß auf der Außenseite des Gehäusebodens (9) eine Tiketklammer (5) angeordnet ist.

7. Spiegelbaueinheit nach wenigstens einem der Ansprüche 1 - 6, dadurch gekennzeichnet, daß dieselbe ggf. mit Ausnahme des Spiegels (3) aus Kunststoff-Spritzgußteilen besteht.

## Claims

1. Mirror unit for vehicle sun visors having
- a flat oval or elliptical housing (1),
- a housing base (9) which is surrounded in an encircling manner by a collar (6), aligned perpendicularly to it, and has a circuit opening (12) at one longitudinal end,
- a round mirror (3) which covers the opening (12) from the housing interior and whose diameter is larger than that of the opening (12), and
- a flat cover (2) which is of pear-shaped or drop-shaped design and is coupled pivotably within the housing (1) at one end region of the short housing axis in such a manner that it is able to cover the mirror (3) in a first end position and is able to substantially uncover the mirror (3) in a second end position.

2. Mirror unit according to Claim 1, characterized in that the cover (2) is mounted in a manner such that it can pivot between the housing base (9) and the mirror (3), and in that the cover (2), in its position uncovering the mirror (3), still slightly covers the mirror (3).

3. Mirror unit according to Claim 1 or 2, characterized in that the collar (6), at that end region of the housing (1) which is adjacent to the circuit opening (12), has upper and lower web segments (11,14) between which the mirror (3) is held, and in that the housing (1) bears a stabilizing element (4) which extends along the short housing axis and has a displacement-safeguarding element (30) for the mirror (3).

4. Mirror unit according to at least one of Claims 1-3, characterized in that the cover (2) has a spring tongue (22) on one edge region, and in that latching elements (16,42) for latching the spring tongue (22) are arranged on the collar (6) of the housing (1).

5. Mirror unit according to at least one of the Claims 1-4, characterized in that the cover (2) is provided with an actuating handle (25).

6. Mirror unit according to at least one of Claims 1-5, characterized in that a ticket clip (5) is arranged on the outside of the housing base (9).

7. Mirror unit according to at least one of Claims 1-6, characterized in that the said mirror unit, optionally with the exception of the mirror (3), consists of injection-moulded plastic parts.

## Revendications

1. Unité de miroir pour pare-soleil de véhicule comprenant :
- un boîtier plat (1) de forme ovale ou elliptique,
- un fond de boîtier (9), entouré sur sa périphérie par un rebord (6) orienté perpendiculairement à celui-ci et présentant une ouverture circulaire (12) au niveau d'une extrémité longitudinale,
- un miroir circulaire (3) recouvrant l'ouverture (12) depuis l'intérieur du boîtier, dont le diamètre est plus important que celui de l'ouverture (12) et
- un couvercle plat (2), en forme de poire ou de goutte et articulé à l'intérieur du boîtier (1) au niveau d'une zone d'extrémité du petit axe du boîtier de manière à pouvoir pivoter de telle sorte qu'il puisse recouvrir le miroir (3) dans une première position terminale et permette essentiellement de dégager le miroir (3) dans une deuxième position terminale.

2. Unité de miroir selon la revendication 1, caractérisée en ce que le couvercle (2) est monté pivotant entre le fond du boîtier (9) et le miroir (3), et en ce que le couvercle (2) recouvre encore légèrement le miroir (3) dans sa position dégageant le miroir (3).

3. Unité de miroir selon la revendication 1 ou 2, caractérisée en ce que le rebord (6) présente, au niveau de la zone d'extrémité du boîtier (1) voisine de l'ouverture circulaire (12), des segments d'ailettes supérieurs et inférieurs (11, 14), entre lesquels le miroir (3) est reçu et en ce que le boîtier (1) porte un élément de stabilisation (4) s'étendant le long du petit axe du boîtier vec un élément (30) empêchant le miroir (3) de bouger.

4. Unité de miroir selon au moins l'une des revendications 1 à 3, caractérisée en ce que le couvercle (2) présente au niveau d'une zone périphérique une languette flexible (22) et en ce que des éléments d'encliquetage (16, 42) sont disposés au niveau du rebord (6) du boîtier (1) pour s'encliqueter avec la languette flexible (22).

5. Unité de miroir selon au moins une des revendications 1 à 4, caractérisée en ce que le couvercle (2) est pourvu d'une manette d'actionnement (25).

6. Unité de miroir selon au moins une des revendications 1 à 5, caractérisée en ce qu'une pince pour tickets (5) est disposée sur le côté externe du fond de boîtier (9).

7. Unité de miroir selon au moins une des revendications 1 à 6, caractérisée en ce qu'elle se compose de pièces en plastique moulées par injection, le cas échéant à l'exception du miroir (3).
